# EUROPEAN PATENT APPLICATION

(11) **EP 2 439 692 A1**
(43) Date of publication of application: **11.04.2012**
(21) Application number: 11007759.1
(22) Date of filing: 23.09.2011
(51) Int. Cl.: G06Q 10/10

(54) **Platform enabling web-based interpersonal communication within shared digital media**

(30) Priority: 23.09.2010 US 385584 P
(71) Applicant: Webdoc SA, 1003 Lausanne (CH)
(72) Inventor: Tzonis, Stelios, 1009 Pully (CH); Tzonis, Alexandre, 1800 Vevey (CH); Pavillard, Cyril, 1006 Lausanne (CH); Fivaz, Mathieu, Charles, 1170 Aubonne (CH); Bachmann, Julien, 1053 Cugy (CH)
(74) Representative: Mötteli-Mantelli, Novella

(57) **Abstract**

The invention consists of a new form of digital media document comprising content, applications and services that facilitate sharing and social expression on the Internet within a unified media object instead of being confined to specific websites such as social-networking services. This invention transforms content into content which is reusable, particularly for social expression, by enabling encapsulation of said content within an online document. This can be achieved by presenting a set of library applications to the user, where each application connects to a specific third-party web service, and presents the third-party service reusable content to the user, so the user can reuse in a very simple way, such as drag-and-drop. The invention promotes social engagement with digital multimedia while enabling social expression, commenting and editing of content or of the online document and optionally linking these activities to the website or service timeline.

## Description

### Background of the Invention

This invention relates to multimedia sharing and related social interaction amongst users on the Internet.

The Internet is a platform that allows access to many types of digital content, applications and services. Collectively, this material can be described as multimedia, where multimedia is media and content that uses a combination of different content and interactivity forms. Multimedia content includes a combination of text, audio, still images, animation, video and so on. Interactive multimedia refers to products and services that respond to the user's actions, and digital interactive multimedia typically refers to multimedia that is accessed on digital devices such as desktop or laptop computers, PDAs, game consoles, smart phones, electronic book readers or other computing device. Multimedia interactivity forms include services, applications and their interfaces, such as playback or navigation controls or hyperlinks. Some specific applications of interactive multimedia are videogames, interactive advertising, virtual and augmented reality, interactive television, interactive, narrative or enhanced electronic books, algorithmic art, ambient intelligence and social media. Social media refers to the use of web-based technologies to transform one-way broadcast media into two-way social media dialogues and to interactivity that allows users to communicate with each other. Some examples of such communication on the Internet are chat, instant message, comments, discussions, voting, rating, liking, posting, re-posting, tagging and so on.

Sharing access to digital multimedia among users on the web has become a popular pastime. Users share almost any type of web content, applications and services with each other, such as photos, videos, audio, news, games, polls, interactive maps, and so on. On the web, users navigate or browse by following hyperlinks, which are references that users can activate in some way. Hyperlinks can point to webpages, documents or elements within documents. The World Wide Web, commonly referred to simply as the web, is a system of interlinked multimedia connected by hyperlinks. On the web, webpages contain hyperlinks to other webpages. The most common target of a hyperlink on the web is a Uniform Resource Locator (URL) that specifies where an identified resource is available and the mechanism for retrieving it.

Sharing amongst users on the web is usually done by sending a URL by e-mail or through message boards, discussion forums or social network sites. These methods allow the sender to add a short comment or message, but do not allow her to make annotations in the original material or allow her comments to become part of the original material so they remain visible if it is subsequently redistributed elsewhere. Furthermore, the receiving user must often click on the shared URL to visit the original web page to view the material, such as by displaying it in a web browser. Some content elements, such as videos and photos, can be directly embedded within other websites for direct viewing. Bloggers or website editors can share content with others in this way, by embedding the shared content in a blog post, for example using generic containers for media objects such as the <object> or <embed> elements that are provided by the HyperText Markup Language (HTML) text and image formatting language used by web browsers to dynamically format web pages.

Users receiving links to shared web multimedia by e-mail can respond by sending a reply to the sender and can further share to their own friends via e-mail, in turn adding their own remarks to the message. Users sharing on message boards and social network websites can typically express their appreciation through "Like" or re-posting using dedicated buttons provided for this purpose, such as "Re-blogging" on Tumblr or "Retweeting" on Twitter. These mechanisms of expression differ from commenting features included in standard document editors such as Microsoft Word by their one-to-many nature, their support for threaded conversations and notification mechanisms. Furthermore, users wishing to express themselves with respect to shared material need not have editing privileges to modify the material and are not restricted to text comments, as in standard editors. On social network services, online fora and message boards, users may also express themselves with other tools such as "Like" or "Voting" buttons and emoticons. An emoticon is an expression of the user's face or emotional state represented by a text-based graphic or small image. In fact, the type of engagement allowed by these services is limited only by the functionality of the applications available on the service's website. Such communications however are confined to the social network site on which they were initiated and are typically attached to the news feed or timeline of the social network service, not to the shared material.

Several types of online services, such as wikis and other collaborative content creation and editing services have addressed the problem of allowing multiple users comments to become part of the content. A wiki is a website that allows creation of interlinked web pages using a web browser and simple markup language or text editors. Wiki software makes these tools available for collaborative editing. Online collaboration tools like "GOOGLE DOCS" or "MICROSOFT SHAREPOINT" allow multiple users to access and edit individual files of various formats. Blogging services like "BLOGGER", "WORDPRESS" or "TYPEPAD" allow multiple users to have authoring privileges to edit and publish content.

In all of these cases, the shared content is hosted on a service that allows user comments and contributions. Various users may add their comments to the content; however these comments are typically only viewable on the website of the sharing service and are displayed in a separate area from the content. Multiple comments from different sharing sites cannot be integrated, but will only be visible from the site on which the comment was entered. In addition to comments, users may edit the content or enrich it with new material if they have permission, but they must do so from the website of the sharing service or must download the document to their personal computer or other device, perform the editing there and then upload the resulting new document to the website's server.

None of the solutions enabling social engagement with digital multimedia integrate the process of social expression, commenting and editing into the content or document; all of them link these activities to the website or service timeline. Comment aggregation and management services such as DISQUS, Echo or JS-Kit provide a centralized discussion platform for blogs and websites. Such services provide a full-featured commenting service for webpage or blog creators independently of the content management software, as well as bringing together and combining related commentary and social discussion about a page from other sites around the web into a single commenting stream. Such services may also provide social network functionality for the commenting community, including comment tracking and rating, as well as commenter reputation functionalities and conversation sharing to other social networks such as Twitter or "FACEBOOK". Most of these services are limited to management of text-based comments, but some services allow including multimedia elements with the comments stream.

These services are intended to federate social interaction and discussions across the web so that they are not confined to single websites or social networks; however such services are limited to commenting functionality and user comments are stored and managed separately from the content of the website. Comment management systems do not support other forms of direct interaction with the content, such as contribution and modification.

### Summary of the Invention

The present invention provides a method and system for implementing a new form of digital media comprising content, applications and services that allows sharing and social interaction between networked users within a unified digital multimedia object. It is an objective of the invention to provide an improved user experience for digital multimedia sharing, in particular, by not limiting user interaction to certain types of activities or to the use of a specific website or social network and by unifying discussion and comments within the digital multimedia document so that they are viewable from any web page displaying the document. The invention defines an integrated media object/document representing a new type of media that is more powerful than existing media types and achieves the goal of unifying content, applications, services and social interactions instead of segregating them across separate websites and web services.

The method consists of providing at least one client device (computer, laptop, Internet tablet, mobile phone, PDA, and so on), at least one server device (typically a computer) and at least one database connected through a network; displaying on the client device a digital multimedia document retrieved from the server via the network, where the digital multimedia document is composed of a combination of content, application, service and related social elements contributed by one or more users and in which the viewer is allowed to modify the elements comprising the document; using the applications provided within the document or called up from the server via code in the document to add comments to, discuss or modify the document; communicating the modifications of the digital multimedia document via the network from the client to the server and recording them to a database so they can be retrieved by other users; and making available a code identifying the location of the document and the mechanism for retrieving it over the network.

The invention allows a user using a client device connected to a network such as the Internet to create, locate, retrieve, view, comment on, discuss and modify a digital multimedia document from any website. In one application of the invention, the user can connect to the server via the network, create a new digital multimedia document, insert constituent elements into the document by using simple drag and drop tools and share it with other users by sending them the document location information. In the preferred embodiment, the document location information consists of the document URL. In one application the user may send the URL to other users via e-mail. In another application, the user may share the URL on a social network site such as "FACEBOOK" or "TWITTER". In the preferred embodiment, the server itself hosts a social network allowing users to access and share documents directly. In still another application, the user may embed the digital multimedia document into a blog or website using standard or non-standard elements of HTML or other markup language.

Regardless of which application is considered, once the digital multimedia document has been shared with other users, said users can subsequently locate, retrieve view, comment on, modify and/or add their own content, application, service or social elements to the document from any website or web page on which the document is displayed. Use of and interaction with the document may be done from any suitable client device connected to the network on which standard web browsing software that can interpret HTML/CSS/Javascript is resident. These users can subsequently add their own content or comments directly into the document in the same manner without being required to go to a particular website or install dedicated authoring software. These contributions in turn become part of the document and are shared with and further viewed by and commented on or modified by still other viewers, on still other websites and so on.

Privacy settings on the digital multimedia document may be implemented to limit its visibility and set the access privileges defining the types of interaction that are permitted to other users. For example, a digital multimedia document may be private (accessible only to the user that created it), shared with and visible to a limited number of other users, or public, i.e. accessible by any user. The access privileges specify the roles that different users can play with respect to the multimedia document. In the preferred embodiment, an author can edit anything in the document, including adding and deleting comments; a contributor can only edit the elements she/he has contributed, including her/his own comments; and a viewer-commenter can only interact with the document by submitting comments or using embedded applications destined for her/his use. In the preferred embodiment it is also possible to designate users as viewers-only, meaning they cannot modify, or comment on the multimedia document in any way but can still interact with the embedded interactive applications.

In the preferred embodiment, multiple users may simultaneously access and interact with the digital multimedia document. Users are able to see which other users are online at the same time and interact simultaneously with the document and with each other, such as to comment, discuss, or modify the document. In this case, the technical challenges faced by collaborative systems such as group awareness, notification, concurrency control, conflict resolution, and so on must be solved. SubEthaEdit, a collaborative real-time editor designed for Mac OS X and Google Wave are two prior solutions attempting to address this problem. In the preferred embodiment of the present invention, a real-time collaboration XMPP (Extensible Messaging and Presence Protcol) server provides the required functionality, includingnear-real-time, extensible instant messaging (IM), presence information, and contact list maintenance.

Other applications of the invention are possible. For example, companies providing tickets to events, transportation, museums, amusement parks, sports arenas or other services may create digital multimedia documents of the type defined by the invention to issue tickets to users that include additional information related to the event and allow social engagement such as sharing, discussion and interactivity. Another example of potential applications of the invention involves its use by teachers to create educational materials for students consisting of digital multimedia documents of the type defined by the invention, which can be shared with students who can then interact with, collaborate on and discuss to enhance learning and carry out assignments.

An object of the invention is to promote social engagement with digital multimedia while enabling social expression, commenting and editing of content or of the online document and optionally linking these activities to the website or service timeline.

Still other applications of the invention are possible, as may be inferred from the detailed specifications described below.

### Brief Description of the Drawings

**FIG. 1** is a block diagram of an embodiment of the invention using a client computer, a server computer, data and media storage repositories and a network;
**FIG. 2** is a schematic diagram of an online document that is able to retrieve, process, layout and manage user interaction;
**FIG. 3A** is a block diagram of another embodiment of the invention whereby multiple users interact with the document and with each other;
**FIG. 3B** is a block diagram of a variant of the invention wherein a first user embeds the document in a third-party website and a second user interacts with it through the third-party website;
**FIG. 4** is a block diagram of another embodiment of the invention with the addition of third-party services;
**FIG. 5A** is a block diagram illustrating how users may add third-party content and services to the multimedia document;
**FIG. 5B** is a block diagram illustrating how different applications may be provided to the user to access different services that will make a portion of a web service reusable;
**FIG. 6** is a schematic diagram showing a screen display of the layout of a multimedia document of the type specified by the invention;
**FIG. 7** is a schematic diagram showing a screen display of the interactive social features of a multimedia document of the type specified by the invention;
**FIG. 8** is a schematic diagram showing a screen display of the social interaction tools in accordance with the present invention;
**FIG. 9** is a schematic diagram showing the interaction of multiple users having different roles with a multimedia document of the type specified by the invention.
**FIG. 10** is a block diagram showing an alternate embodiment of the invention for permitting portable online document editing and collaboration.

Those skilled in the art will appreciate that elements in the Figures are illustrated for simplicity and clarity and have not necessarily been drawn to scale. For example, dimensions may be exaggerated relative to other elements to help improve understanding of the invention and its embodiments. Furthermore, when the terms 'first', 'second', and the like are used herein, their use is intended for distinguishing between similar elements and not necessarily for describing a sequential or chronological order. Moreover, relative terms like 'front', 'back', 'top' and 'bottom', and the like in the Description and/or in the claims are not necessarily used for describing exclusive relative position. Those skilled in the art will therefore understand that such terms may be interchangeable with other terms, and that the embodiments described herein are capable of operating in other orientations than those explicitly illustrated or otherwise described.

### Detailed Description of the Preferred Embodiment

The following description is not intended to limit the scope of the invention in any way as they are exemplary in nature, serving to describe the best mode of the invention known the inventors as of the filing date hereof. Consequently, changes may be made in the arrangement and/or function of any of the elements described in the exemplary embodiments disclosed herein without departing from the spirit and scope of the invention.

The invention consists of a method and system defining a new form of digital media comprising content, applications, services and social interaction elements that facilitate sharing, inter-personal communication and social expression on the Internet within a unified digital multimedia object instead of being confined to specific websites such as social-network services.

Embodiments of the invention will now be described with reference to the accompanying Figures.

Document content may refer to any type of content of any document, including interactive content such as applications and services. For example, a document may contain a combination of text, audio, images, animation, video and/or any other content. Other types of content that may comprise a document include interactive content such as playback or navigation controls or hyperlinks. Such interactive content may include applications. Examples of applications include social media, games, interactive television, interactive, narrative or enhanced electronic books, interactive advertising, algorithmic art, ambient intelligence, virtual and augmented and mixed reality and/or other applications. Social media refers to the use of web-based technologies to transform one-way broadcast media into two-way social media dialogues and into interactivity that allows users to communicate with each other. Some examples of such communication on the Internet are chat, instant messaging, comments, discussions, voting, rating, liking, posting, re-posting, tagging and so on.

Examples of text may include text written in a markup language, such as HTML and CSS, XML, XHTML, Standard Generalized Markup Language (SGML), MathML, or other text format such as .TXT or .RTF. Examples of still image formats are .JPG, .GIF, .TIFF, .BMP, .PNG, .PSD or other compressed or non-compressed format. Vector image formats may include SVG, EPS or other formats. Video/animation formats may include .MOV, .WMV, .AVI, .MP3, .MP4, .SWF, .M4V or other formats. Applications may be of type .HTML, JavaScript, Java, C/C++ or other programming language. Some applications may require plug-ins, such as Adobe Flash or Java applets or other technologies.

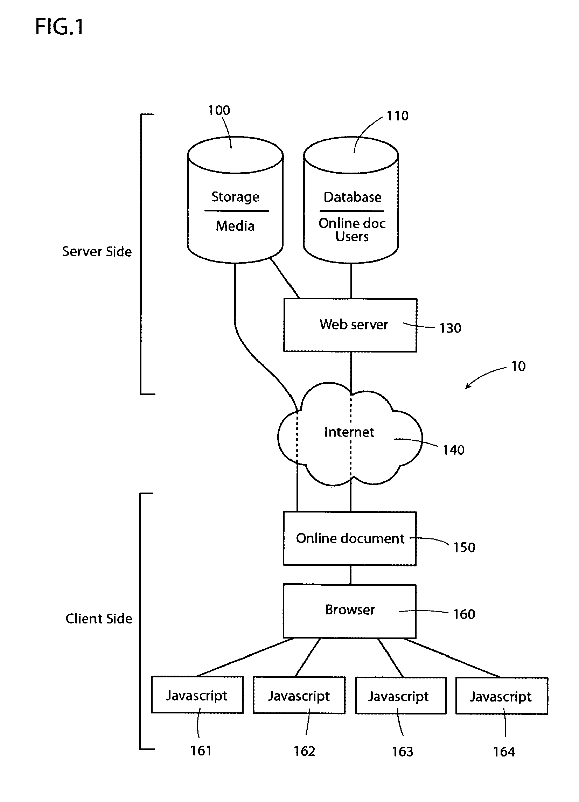

Referring now to **FIG. 1****,** the system 10 of the invention includes a server computer 130, a data storage repository 110, a media storage repository 100 and a network 140 in which the client is provided with tools by which he can, on the client side, modify or create the digital multimedia document 150. The system 10 provides a platform for web-based interpersonal communications on a computer network 140 through shared content objects comprising a combination of text, audio, still images, animation, video, services, applications, social components such as chat and comments and their interfaces. Instructions control access and edit privileges depending on the class of user. The system 10 includes a server 130 adapted to communicate with at least two client computers. The server 130 hosts an online document 150 containing the shared content objects. The online document 130 is instantiated on the clients upon request to the server 130, thus creating an instantiated version of the online document 150 on the client. The instantiated version contains additional items consisting of software instructions and data for connecting to the server 130. The software instructions include instructions for cooperating with the server to integrate the process of social expression into the document including enabling commenting within the online document 150. In addition, such software instructions include instructions for cooperating with the server 130 to enable editing, modifying or manipulating the contributed content in the online document 150, where modifications and records of user interactions such as voting, rating or gameplay are sent to the server by the client and stored by the server 130 in an online data storage repository 100. Further instructions are provided for cooperating with the server 130 to create specific applications or instructions, embedded in the online document 150, which allow users to interact with the online document and the content therein in pre-defined ways. Still further instructions are provided for cooperating with the server 130 to manage third party services for maintaining corresponding content embedded in the document including contributed social elements into the document so that comments and contributed content can be generated and are viewable from a plurality of clients connected to a plurality of server computers over a computing network 140.

The server computer 130 is connected with document 150 via the network 140, and document 150 is therefore referred to in the figure and in what follows as an online document. In one embodiment, online document 150 may be accessed from server computer 130 and manipulated over the Internet 140. In another embodiment, online document 150 may be local to a user's computer. Server computer 130 maintains a data storage repository 110 containing metadata about online documents of the type described by the invention, including but not limited to information necessary to access and process the online documents, their modification history as well as metadata describing the users that can access them. Online document 150 retrieves the information allowing correct presentation, manipulation and user interaction from server computer 130 over the network 140, including the references to stored multimedia elements of the document that are then retrieved from media storage repository 100. The online document 150 includes the software instructions required to process the information received from server computer 130 to render the content in web browser 160, manage user interaction with it and send updates to server computer 130 to record the user's activities in data storage repository 110 and in media storage repository 100. The browser includes necessary support to correctly present the elements of the online document including scripting, markup language support and presentation semantics such as Javascript 161, HTML 162, and CSS 163. Optionally, the browser may include support for plug-ins 164 that provide treatment of non-standard content such as Adobe Flash.

In an embodiment, the system 10 includes a profile module, a messaging module, a notification module, and a statistics module. Such modules cooperate to functionality that enables the hosting of an online social network of interconnected websites. The profile module enables the creation of profiles describing the user and browsing profiles of other users. The messaging module for sending messages to and sharing documents with other users. The notification module is adapted to process notifications of activities of other users, and to cooperate with the messaging module for sending announcements of newly created online documents or of user activities within online documents, such as comments, votes or ratings. The statistics module gathers, stores and enables a user to view statistics concerning other users and online documents, such as how many other users the user is connected to and how many users have viewed an online document.

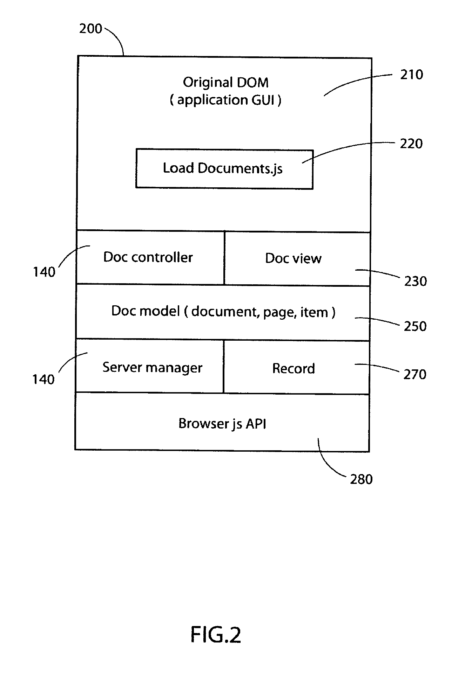

Referring now to **FIG. 2****,** in another embodiment, the online document 200 is able to retrieve, process, layout and manage user interaction. The online document 200 is an HTML document consisting of a set of pages, which are HTML divisions that serve as containers for a set of items. An item is an HTML element that is placed inside a page. As an HTML document, online document 200 has a URL. The online document is composed of an original Document Object Model (DOM) 210 and a small Javascript element 220 that loads the document content inside the page. The JavaScript element 220 initializes all the application controllers 240 by binding all actions to buttons and links and loads the document with an Ajax request (one of a group of interrelated web development techniques used on the client-side to create interactive web applications) to the server. The server manager framework 260 instantiates the document model 250. The Javascript element will determine if a specific page must be displayed and will otherwise take the first one and instantiate a page view 230, which generates corresponding HTML and inserts it into the HTML page. Once the page is displayed, the document controllers 240 will allow the user to interact with the document. Communication with the browser is managed by a Javascript element 280 that implements the browser's API.

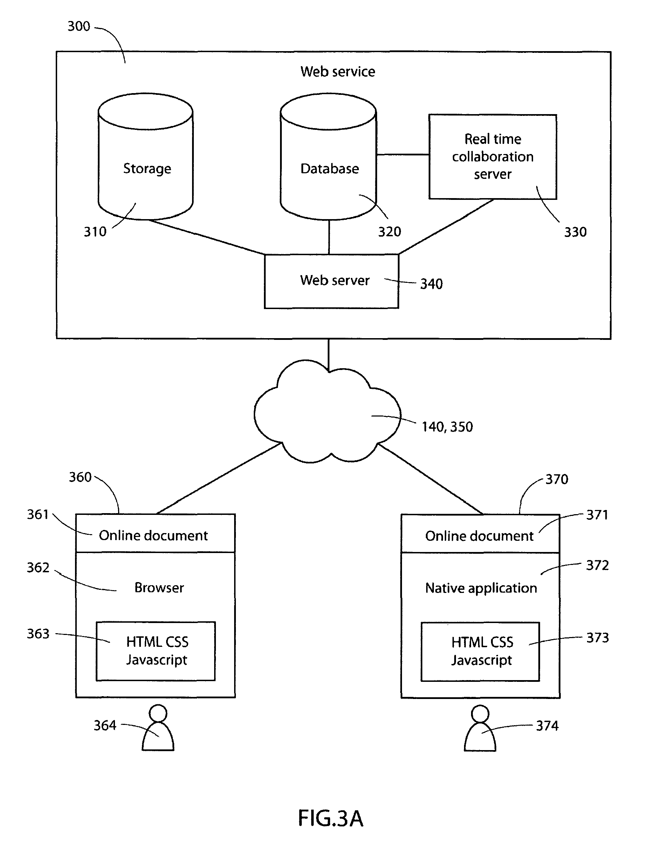

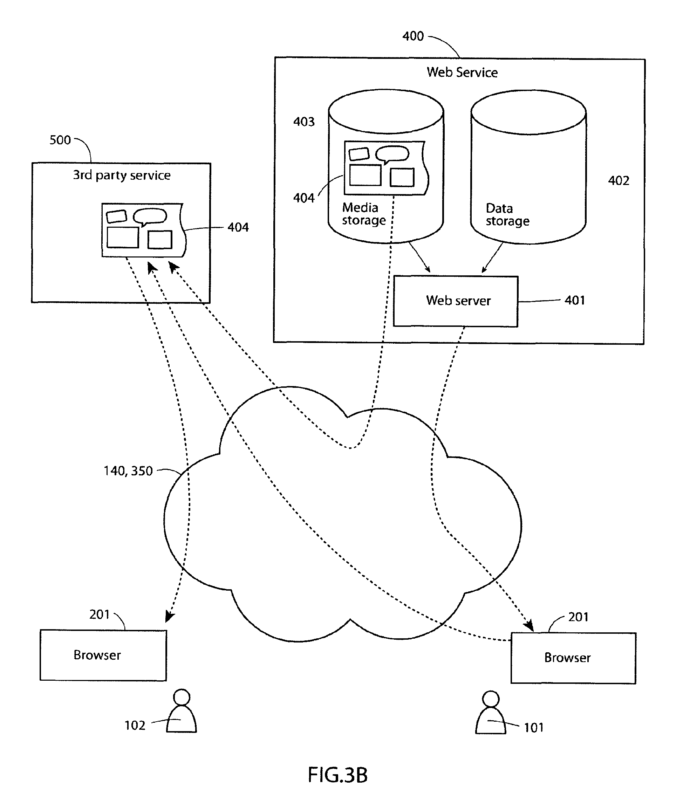

Referring now to **FIG. 3A****,** another embodiment of the online document 361 is shown. **FIG. 3** is similar to **FIG. 1** except that additional users are shown. User 364 accesses online document 361 using digital device 360, on which is running browser 362, which contains support tools 363 for web technologies HTML, CSS and Javascript. Digital device 360 may be one of a desktop or laptop computer, a PDA, a game console, a smart phone, an electronic book reader, a television or other computing device. Device 360 is connected to web service 300 via a network 350. User 374 accesses online document 371 using digital device 370, on which is native application 372, which contains support tools 373 for web technologies HTML, CSS and Javascript. Digital device 370 may also be one of a desktop or laptop computer, a PDA, a game console, a smart phone, an electronic book reader, a television or other computing device. Device 370 is also connected to web service 300 via a network 350. Users 364 and 374 are independent of each other. Since they may both access the same document simultaneously, i.e. document 361 and 371 may in fact be the same, real-time collaboration server 330 has been added to the diagram to manage the concurrent interactions. In the preferred embodiment, real-time collaboration server 300 is an extensible Messaging and Presence Protocol (XMPP) server. Web server 340 receives updates from online documents 361 and 371 and sends notifications to XMPP server 330. In turn XMPP server 330 pushes notifications to online documents 361 and 371 allowing users 364 and 374 to interact with the document and with each other.

A variant of **FIG. 3A** is shown in **FIG. 3****B.** In **FIG. 3B****,** a first user 101 uses browser 201 which is connected to web service 400 through network 350 to create an online document 404. Media components of online document 404 are stored in media storage 403 and metadata describing the document is stored in data repository 402. Browser 201 sends requests to web server 401, which handles these requests and carries out all the instructions and processing necessary for the user to create, view and edit the online document. User 101 subsequently uses browser 201 to connect to third-party web service 500 and makes document 404 available on web service 500 by embedding it within a web page there. A second user, 102, visiting third-party website 500 via browser 202, which is connected to third-party website 500 through network 300, is able to view and interact with the document embedded on third-party website 500 via browser 202. When user 102 wants to view or interact with document 404, the third-party website 500 sends a request to web server 401 to retrieve and update as necessary 1) metadata about the document from data repository 402 and 2) media components of the document from media storage 403.

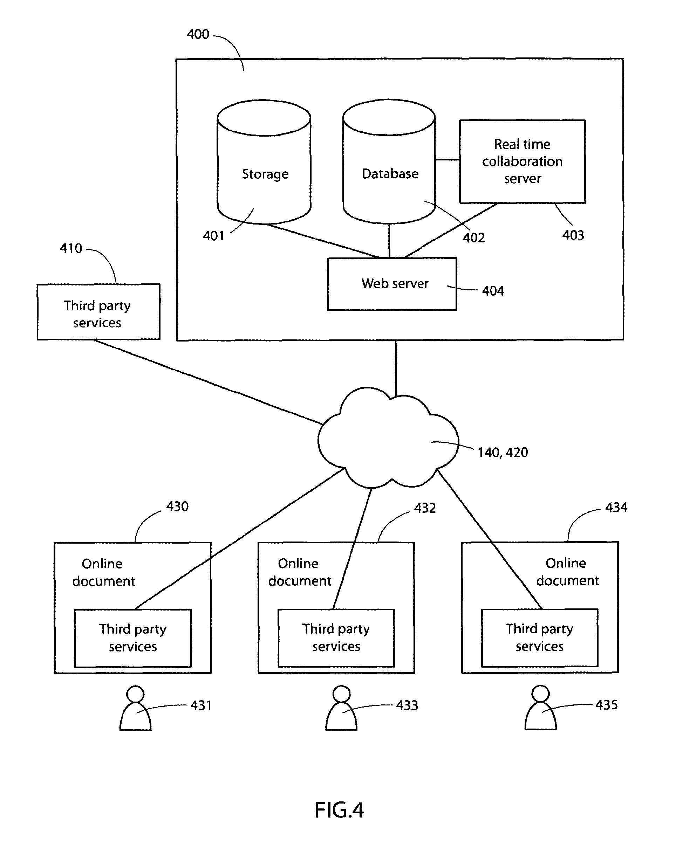

Referring now to **FIG. 4****,** yet another embodiment of the invention is shown. **FIG. 4** is similar to **FIG. 1** and **FIG. 3A** except that third party services have been added to the diagram. Third party services are applications such as games, content hosting, weather live data, messaging or other services that may bring new information to the user through the online document. As shown in **FIG. 4****,** third party service 410 is connected to web service 400 and to user 431, user 433 and user 435 through the network 420. As in **FIG. 1** and **FIG. 3A****,** third party service 410 provides data and applications to online documents running on devices 430, 432 and 434. Users 431, 433 and 435 interact with third party service 410 through the online documents on devices 430, 432 and 434, respectively. The online documents provide the context, applications and controls for this interaction.

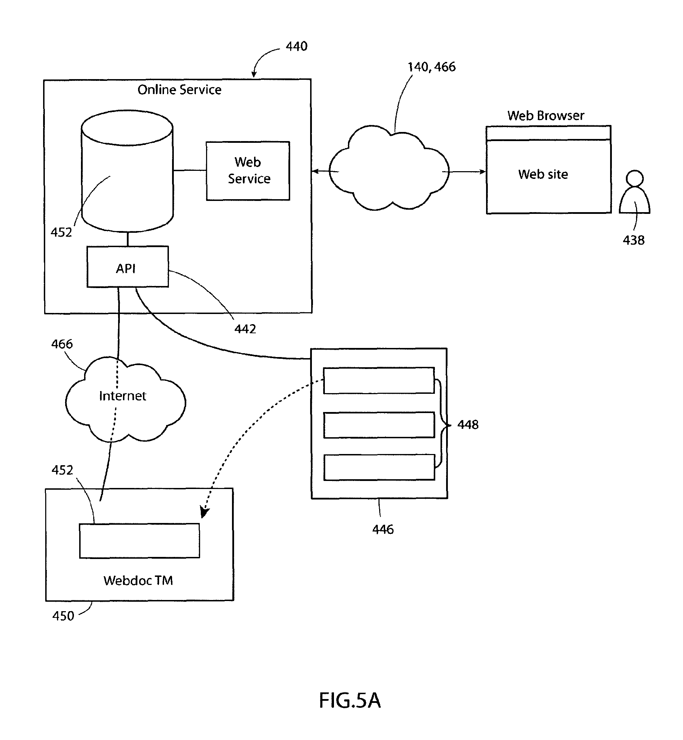

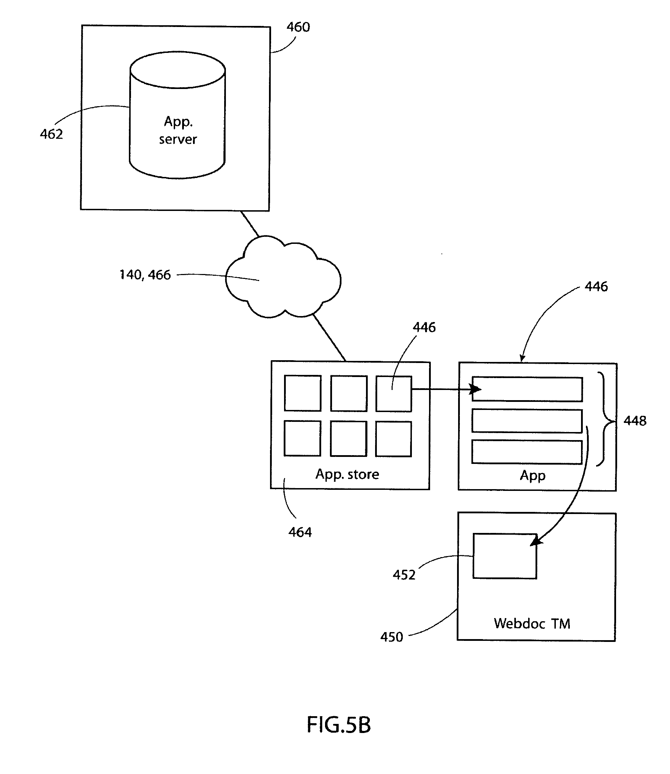

Referring now to **FIG. 5A****,** users 438 may add third-party digital content (including services) which can be interpreted by a web browser to the online document of the invention. Content from any third-party online service 440 that offers an API 442 recognizable by a Library application 446 on the online document server 460, which API provides access to data or content specific to that service, can be added to the online document. This digital content may be content of any type that can be accessed via the web and interpreted by a web browser, such as media or applications, and it may include social data such as comments, ratings, recommendations and other user-generated data from service 440. Library app 446, resident on the online document server 460 (shown in **FIG. 5B**), accesses the API 442 for online service 440 and displays all available content (i.e., content it recognizes) to the user by using a demarcation means (such as by highlighting, or framing or activating). In some cases, the user may perform searches inside the application of the invention, in order to find suitable or compatible content (e.g. searching for a specific song, video, presentation, map, polling, data feed, application, ...). The user selects the indentified content 448 he wants to use with the appropriate means, such as the mouse of his PC or by touching it on a touchscreen display, and preferably drags and drops that content into the online document 450. In one implementation, this may cause a copy of the content 452 to be created within the multimedia document 450. This may also cause the multimedia document 450 to access online service 440 to retrieve live data to present to the viewer, such as in a frame.

Referring now to **FIG. 5B****,** different library apps 446 may be provided to the user to access different content/services. Each library app 446 will make all or a portion of one of the recognized web services' content reusable. The online document service 460 of the invention contains an application server 462, which includes a repository of library apps 446. This repository 464 is displayed to the user through a network 466. The network may be the Internet 140. The user can access a library app 446 that provides him with reusable content of all or a portion of a web service (such as "FACEBOOK" or "YOUTUBE") or content referenced by a web service (such as a link to a external content referenced on "FACEBOOK"). The user can access this content 448 and use some of the content 452 in the online document 450 of the invention. This process helps make content from the Web reusable, particularily for social expression, by enabling encapsulation of said content within a web document; particularily for users without technical or programming knowledge.

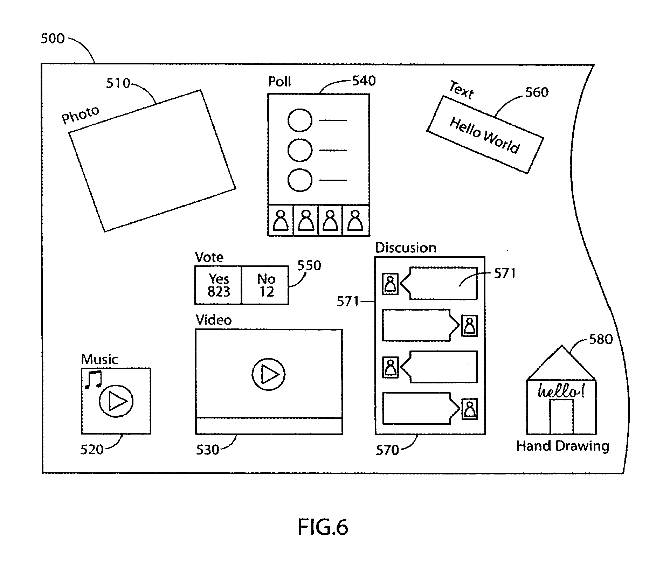

Referring now to **FIG. 6****,** a screen display of a multimedia document 500 of the type described by the invention contains a plenitude of content, application service and social interactivity elements: still image 510, audio music service 520, video 530, interactive poll 540, voting application 550, textual element 560, threaded discussion element 570, and hand drawing 580. Threaded discussion element 570 is updated in real-time with commentary 571 contributed by user 572.

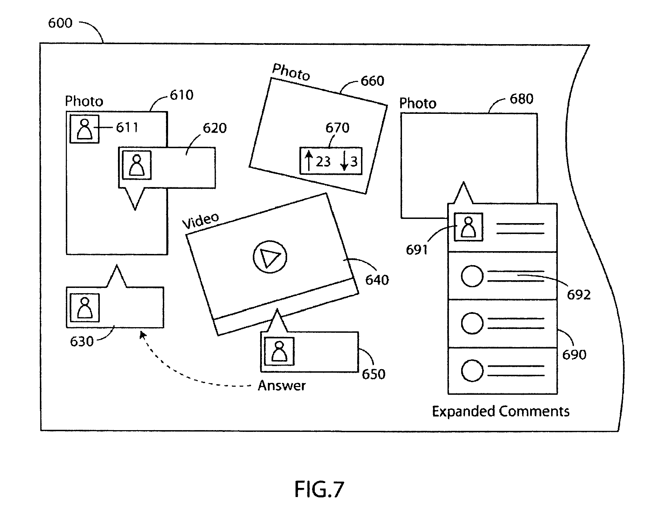

Referring now to **FIG. 7****,** a screen display of the interactive social elements that make up a multimedia document 600 of the type described by the invention contains photograph 610 contributed by users 611 and associated commentary 620 and 630, video 640 and associated comment 650, which is a response to commentary 630. Voting application 670 is associated with photo 660 and threaded discussion 690 is associated with photo 680. Individual comments in discussion 690 are contributed by users 691 and 692 in real-time. The commentary and social interactivity is contained within the document, instead of being found outside it, and the document itself may be thought of as a mini-social network. In other words, the document is made of social contributions.

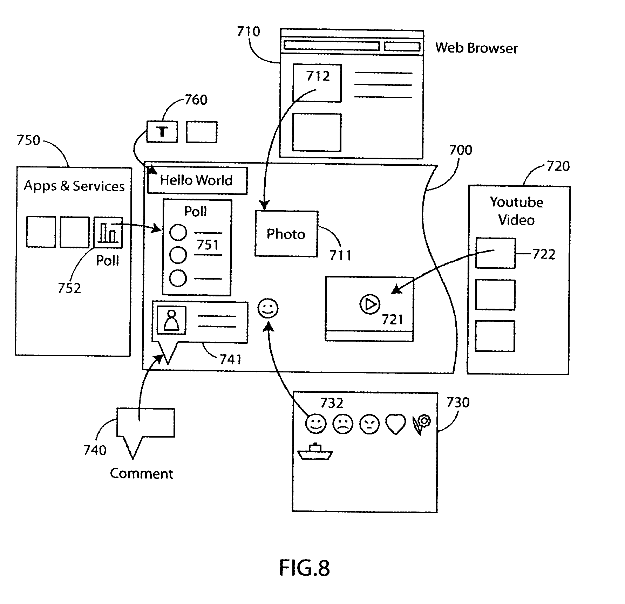

Referring now to **FIG. 8****,** users interact with the document according to one embodiment of the invention in which the document 700 is manipulated to insert picture 712 from a third party website displayed in a web browser 710. Insertion may be accomplished by dragging and dropping the content from one window to another. The inserted picture causes a reference or copy 711 of the photo to be inserted into the document content. Video inspector 720 provides preview thumbnails of videos from a video hosting service such as YouTube. Video 721 may be similarly inserted in the document by dragging and dropping 722 from this tool 720. Emoticon palette 730 may be used to select emoticon 732 and insert it as object 731 in the document. Commenting tool 740 allows the user to enter a text comment which will appear in the document as comment bubble 741, with a thumbnail of the commenting user's profile picture. Polling application 752 is selected from application library 750 and inserted into the document as object 751. A text editor 760 is used to insert textual element 761 into the document.

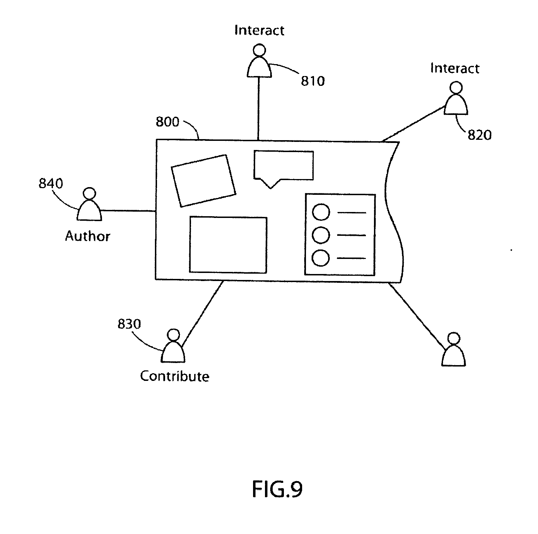

Referring now to **FIG. 9****,** the interaction of multiple users with a multimedia document of the type described by the invention involves users having different privileges and roles. User 840 is the author/creator of document 800 and has full privileges to modify all content of the document, including content contributed by other users. User 830 is a contributor and is able to add content to and interact with document 800 but may only modify the content she submitted. User 820 is a participant in the document, but is not able to contribute or modify the content; she can only interact with the elements that have been created by user 840 and 830.

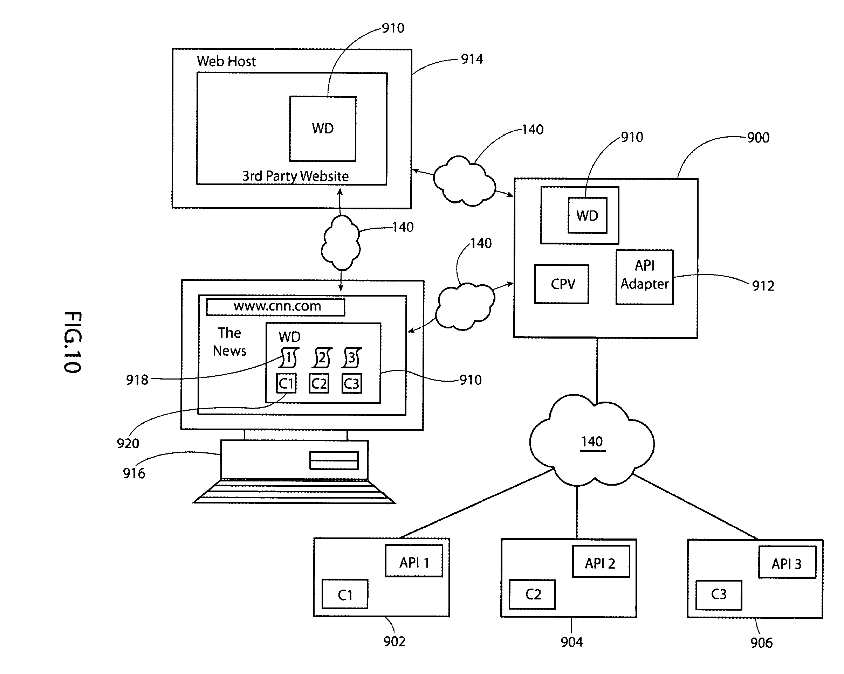

Referring now to **FIG. 10****,** in an alternate embodiment, the server 900 of the invention allows the implementation of these third party services 902, 904, and 906 via code written to deal with the APIs of many different third party services, the processing of which is handled by the server. During processing on the server 900, typically, editing software on the server embeds the necessary calls to the server in the online document 910 itself when in editing mode (in which editing is typically done via the server 900 but of course, could also be done via dedicated editing software installed on the author's PC). The server 900, via an API adapter module 912, performs the task of making sure all code needed to deal with third party services is updated on the server, so that, when the online document 910 becomes portable, i.e., it leaves a PC that might have dedicated online document editing software loaded on it), and resides on a web server 912 or on a PC 916 of someone who knows nothing about the online document and has no online document software loaded, the embedded calls 918 to the server 900 in the online document 910 ensure the continued functionality of the third party services 902, 904, and 906 because once the online document 910 is opened by a user while connected to the Internet 140, all the embedded calls 918 to the server 900 initiate processing on the API adapter module 912 of the server 900 which includes, on the one side, an interface with the related feature of the online document and on the other side, an interface with the latest versions of all third party services 902, 904, and 906. Thus, such an arrangement permits the direct functioning (although not actually directly, rather, through the online document server) of the third party features or content 920 in the online document 910 thanks to the embedded calls 918 to the third party services, or calls to the server 900, which then handles the rendering of the third party services in the online document. In this way, the viewer can enjoy the integrated third party content 920 without needing all the otherwise necessary, up-to-date third party software on his PC. In addition, updates to the calls 918 embedded in the online document 910 can be automatically updated when the document 910 detects that it is connected to the Internet 140.

Optionally, the invention adheres user groups to corresponding terms of service which help assure that the online document may be edited and widely distributed. The system and method of the invention therefore may have a content registration module which, through click agreement to suitable terms of service upon registration of a user author, prior to allowing registration of content on the server of the invention, contractually adheres each member of each user group to terms of use associated with the user's group. These terms of use include the granting of at least limited distribution rights, rights to create derivative works, rights to publish and republish, waiver of rights to attribution and integrity and quit claim licenses related to any integrated intellectual property which the purveyors of the invention deem useful to better ensure a wide distribution, collaborative editing and republishing of the document. The terms of service further seek assurances from the user author that the user has the right to publish, distribute, or edit content which that user integrates into the document. Terms of use include the granting to the purveyors of the invention, the administrators of the content of the platform which enables collaborative editing of the documents, rights to delete inappropriate content or content which the administrator suspects may not have been uploaded with the requisite rights of the original author.

In an advantage, the system and method of the invention enables social engagement with digital multimedia while enabling social expression, commenting and editing of content or of the online document while linking these activities to the website or service timeline.

It should be appreciated that the particular implementations shown and herein described are representative of the invention and its best mode and are not intended to limit the scope of the present invention in any way.

It should be appreciated that many applications of the present invention may be formulated. One skilled in the art will appreciate that the network may include any system for exchanging data, such as, for example, the Internet 140, an intranet, an extranet, WAN, LAN, wireless network, satellite communications, and/or the like. It is noted that the network may be implemented as other types of networks, such as an interactive television network. The users may interact with the system via any input device such as a keyboard, mouse, kiosk, personal digital assistant, handheld computer, cellular phone and/or the like. Moreover, the system contemplates the use, sale and/or distribution of any goods, services or information having similar functionality described herein.

The computing units mentioned herein may be connected with each other via a data communication network. The network may be a public network and assumed to be insecure and open to eavesdroppers, or may also be secure. In one exemplary implementation, the network may be embodied as the Internet 140. In this context, the computers may or may not be connected to the Internet 140 at all times.

As will be appreciated by skilled artisans, the present invention may be embodied as a system, a device, or a method.

The present invention is described herein with reference to block diagrams, devices, components, and modules, according to various aspects of the invention. It will be understood that each functional block of the blocks diagrams, and combinations of functional blocks in the block diagrams, can be implemented by computer program instructions which may be loaded onto a general purpose computer, special purpose computer, or other programmable data processing apparatus to produce a machine, such that the instructions which execute on the computer or other programmable data processing apparatus create enable the functionality specified in the block diagrams.

Accordingly, the block diagram illustrations support combinations of means for performing the specified functions, combinations of steps for performing the specified functions, and program instruction means for performing the specified functions. Each functional block of the block diagrams and flowchart illustrations, and combinations of functional blocks in the block diagrams, may be implemented by either special purpose hardware-based computer systems which perform the specified functions or steps, or suitable combinations thereof.

Moreover, the system contemplates the use, sale and/or distribution of any goods, services or information having similar functionality described herein.

The specification and figures should be considered in an illustrative manner, rather than a restrictive one and all modifications described herein are intended to be included within the scope of the invention claimed. Accordingly, the scope of the invention should be determined by the appended claims (as they currently exist or as later amended or added, and their legal equivalents) rather than by merely the examples described above. Steps recited in any method or process claims, unless otherwise expressly stated, may be executed in any order and are not limited to the specific order presented in any claim. Further, the elements and/or components recited in apparatus claims may be assembled or otherwise functionally configured in a variety of permutations to produce substantially the same result as the present invention. Consequently, the invention should not be interpreted as being limited to the specific configuration recited in the claims.

Benefits, other advantages and solutions mentioned herein are not to be construed as critical, required or essential features or components of any or all the claims.

As used herein, the terms "comprises", "comprising", or variations thereof, are intended to refer to a non-exclusive listing of elements, such that any apparatus, process, method, article, or composition of the invention that comprises a list of elements, that does not include only those elements recited, but may also include other elements described in the instant specification. Unless otherwise explicitly stated, the use of the term "consisting" or "consisting of" or "consisting essentially of" is not intended to limit the scope of the invention to the enumerated elements named thereafter, unless otherwise indicated. Other combinations and/or modifications of the above-described elements, materials or structures used in the practice of the present invention may be varied or adapted by the skilled artisan to other designs without departing from the general principles of the invention.

The patents and articles mentioned above are hereby incorporated by reference herein, unless otherwise noted, to the extent that the same are not inconsistent with this disclosure.

Other characteristics and modes of execution of the invention are described in the appended claims.

Further, the invention should be considered as comprising all possible combinations of every feature described in the instant specification, appended claims, and/or drawing figures which may be considered new, inventive and industrially applicable.

Multiple variations and modifications are possible in the embodiments of the invention described here. Although certain illustrative embodiments of the invention have been shown and described here, a wide range of changes, modifications, and substitutions is contemplated in the foregoing disclosure. While the above description contains many specific details, these should not be construed as limitations on the scope of the invention, but rather exemplify one or another preferred embodiment thereof. In some instances, some features of the present invention may be employed without a corresponding use of the other features. Accordingly, it is appropriate that the foregoing description be construed broadly and understood as being illustrative only, the spirit and scope of the invention being limited only by the claims which ultimately issue in this application.

## Claims

1. A collaboratively editable document (150, 200, 361, 371, 404, 450, 600, 700, 800, 910) accessible to a group of users (101, 102, 364, 374, 431, 433, 435, 438, 810, 820, 840) via a computer network(140, 350, 420, 466), **characterized in that** the document is adapted to cooperate with a dedicated server (130, 200, 340, 401, 404, 462, 900), the document integrating social media devices (510, 520, 530, 540, 550, 560, 570, 580, 570, 571, 610, 611, 620, 630, 640, 650, 660, 670, 680, 690, 920), wherein editing of the document is managed by program instructions embedded therein which include;
instructions allowing an author or administrator (840) to delete the document or edit all content thereof;
instructions providing lesser privileges to a user (830) of a second user group, wherein a member of the second user group has permission to edit content that the member of the second user group contributed to the document;
instructions providing still lesser privileges to a user (810, 820) of a third user group, wherein a member of this second user group is further restricted from editing the document, such instructions excluding edit privileges to these members, yet nevertheless allowing such members to view and interact with content in the document; and
instructions for presenting a set of library applications to the user, where each application connects to a specific third-party web service, and presents the third-party service reusable content to the user, so the user can readily reuse such content in a simple ,manner, such as drag-and-drop, in particular to users without technical or programming knowledge.

2. The online document of claim 1, wherein the document includes software instructions that enable users to interact with third party services, such as browsing and searching for third party digital content such as images, videos, sounds, interactive application, and social applications, from within an application, selecting third party content to be imported into the document from a third party service, and interacting with the imported content to modify its appearance or formatting when displayed within the document on a display device.

3. The document of claim 1 further embedded with instructions for enabling cooperation with the server to manage third party services (902, 904, 906) for maintaining corresponding content embedded in the document so that contributed content can be generated and are viewable from a plurality of clients connected to a plurality of server computers over the computing network

4. The online document of claim 1, wherein instructions allow a fourth class of users to add a short comment or message, but not to make annotations in the original document or to cause the user's comments to become part of the original material in a manner in which the comments remain visible should the online document be redistributed.

5. The document of claim 1, wherein an action by the user indicating agreement with the terms of service creates a contract with the user giving the user the right to publish, distribute, or edit content which that user integrates into the document.

6. The online document of claim 1, wherein the document includes software instructions for
processing information received from a server computer to
render content in a web browser,
manage user interaction with the document, and
send updates to the server computer to record the user's activities in data storage repository and in a media storage repository, and
instructions for manipulating a browser including a plug-in including associated instructions for correctly presenting elements of the online document, such elements including scripting, markup language support and presentation semantics such as JavaScript, HTML, and CSS.

7. The online document of claim 1, wherein the online document is adapted to be embedded in a 3rd party website using HTML codes that allow media from external websites to be imported into a webpage, and whereby the document on the 3rd party website is adapted to communicate with the server hosting the online document to retrieve and display live content on the online document with which the viewer may interact to edit, modify, comment, or manipulate within the online document without leaving the 3rd party website.

8. A system (10) providing a platform for web-based interpersonal communications on a computer network (140, 350, 420, 466) through shared content objects comprising a combination of text, audio, still images, animation, video, services, applications, or social components such as chat and comments and their interfaces (510, 520, 530, 540, 550, 560, 570, 580, 570, 571, 610, 611, 620, 630, 640, 650, 660, 670, 680, 690, 920), wherein instructions control access and edit privileges depending on the class of user (101, 102, 364, 374, 431, 433, 435, 438, 810, 820, 840), the system (10) comprising a server (130, 200, 340, 401, 404, 462, 900), adapted to communicate with at least two clients, the server hosting an online document (150, 200, 361, 371, 404, 450, 600, 700, 800, 910) containing the shared content objects, the system **characterized in that** said online document is instantiated on the clients upon request to the server, the instantiated version containing additional items consisting of software instructions and data for connecting to the server including:
a. instructions for cooperating with the server to integrate the process of social expression into the document including enabling commenting within the document;
b. instructions for cooperating with the server to enable editing, modifying or manipulating the contributed content in the online document, where modifications and records of user interactions such as voting, rating or gameplay are sent to the server by the client and stored by the server in an online data storage repository;
c. instructions for cooperating with the server to create specific applications or instructions embedded in the online document, which allow users to interact with the online document and the content therein in pre-defined ways; and
d. instructions for cooperating with the server to manage third party services (902, 904, 906) for maintaining corresponding content embedded in the document including contributed social elements into the document so that comments and contributed content can be generated and are viewable from a plurality of clients connected to a plurality of server computers over a computing network.

9. The system of claim 8, wherein the system also hosts an online social network of interconnected websites for which purpose, the system includes:
a. a profile module which enables the creation of profiles describing the user and browsing profiles of other users;
b. a messaging module for sending messages to and sharing documents with other users;
c. a notification module for processing notifications of activities of other users, and for cooperating with the messaging module for sending announcements of newly created online documents or of user activities within online documents, such as comments, votes or ratings; and
d. a statistics module for gathering, storing and enabling a user to view statistics concerning other users and online documents, such as how many other users the user is connected to and how many users have viewed an online document.

10. The system of claim 8, wherein the computer network is the Internet (140).

11. A computer readable medium containing program instructions for managing collaborative editing of an online document (150, 200, 361, 371, 404, 450, 600, 700, 800, 910) composed of a combination of content, application, service and related social elements (510, 520, 530, 540, 550, 560, 570, 580, 570, 571, 610, 611, 620, 630, 640, 650, 660, 670, 680, 690, 920) contributed by one or more users (101, 102, 364, 374, 431, 433, 435, 438, 810, 820, 840) and which may allow users to view and modify the elements comprising the document, the editing performed using at least one client device, at least one server device (130, 200, 340, 401, 404, 462, 900) and at least one database (110, 320, 402) connected through a computer network (140, 350, 420, 466), wherein execution of the program instructions by one or more processors on the system (10) of claim 1 causes the one or more processors to execute steps enabling:
viewing, addition of user comments, and the discussion or modification of the online document;
communicating the modifications of the digital multimedia document via the network from the client to the server;
recording the modifications to a database so they can be retrieved by other users;
providing a device which identifies a location of the online document; and
providing a means of retrieving the online document over the network.

12. A system (10) providing a platform for web-based interpersonal communications through shared content objects comprising a combination of text, audio, still images, animation, video, services, applications, or social components such as chat and comments and their interfaces (510, 520, 530, 540, 550, 560, 570, 580, 570, 571, 610, 611, 620, 630, 640, 650, 660, 670, 680, 690, 920), wherein instructions control access and edit privileges depending on the class of user (101, 102, 364, 374, 431, 433, 435, 438, 810, 820, 840), the system comprising a server (130, 200, 340, 401, 404, 462, 900) adapted to communicate with at least a user author and a user viewer or editor, the system **characterized in that** the server is adapted to host an online document (150, 200, 361, 371, 404, 450, 600, 700, 800, 910) embedded with software instructions for:
a. enabling the user author (101) using a browser (201) connected to a web service (400) through a network (300) to create the online document (404) containing media components,
b. storing such media components of online document (404) in media storage (403);
c. storing metadata describing the document in a data repository (402);
d. enabling, via a browser (201), the sending of requests to web server (401), which handles these requests and carries out all the instructions and processing necessary for the user to create, view and edit the online document;
e. enabling the user author (101), using the browser (201), to connect to third-party web service (902, 904, 906) and makes the online document (404) available on a web website (500) by embedding it within a web page hosted by such web service (500); and
f. enabling the user viewer or editor (102), visiting third-party website (500) via a second browser (202), which is connected to third-party website (500) through the network (300), to view and interact with the document (404) embedded by another on the third-party website (500) via browser (202) such that when the user viewer or editor (102) takes an action signalling his wish to view or interact with document (404), the third-party website (500) sends a request to web server (401) to retrieve and update as necessary metadata about the document from data repository (402) and media components of the document from media storage (403).

13. A system (10) providing a platform for web-based interpersonal communications through shared content objects comprising a combination of text, audio, still images, animation, video, services, applications, or social components such as chat and comments and their interfaces (510, 520, 530, 540, 550, 560, 570, 580, 570, 571, 610, 611, 620, 630, 640, 650, 660, 670, 680, 690, 920), wherein instructions control access and edit privileges depending on the class of user (101, 102, 364, 374, 431, 433, 435, 438, 810, 820, 840), the system comprising a server (130, 200, 340, 401, 404, 462, 900) adapted to communicate with at least a user author and a user viewer or editor, the system **characterized in that** the server is adapted to host an online document (150, 200, 361, 371, 404, 450, 600, 700, 800, 910) embedded with:
instructions for cooperating with the server to implement third party services (902, 904, 906) including code for interfacing with the APIs of a plurality of online third party services, the processing of which is handled by the server;
instructions for enabling editing of the online document, including integrating content, and communicating edited changes to the server;
instructions for cooperating with the server to embed calls to the server in the online document to fetch content dynamically from online third party sources;
instructions for updating the server to ensure compatibility with the APIs of online third party services (902, 904, 906) as these are updated;
instructions for detecting when the online document is connected to a network, and when the network comprises the server, instructions for accessing the server to initiate an update of the online document thereby permitting uniform rendering of the document on various computers or web servers which the document may later be copied to.

14. The system of claim 12, wherein the computer network is the Internet (140).

15. The system of claim 13, wherein the computer network is the Internet (140).
